# EUROPÄISCHE PATENTANMELDUNG

(11) **EP 2 251 957 A2**
(43) Veröffentlichungstag der Anmeldung: **17.11.2010**
(21) Anmeldenummer: 10156840.0
(22) Anmeldetag: 18.03.2010
(51) Int. Cl.: H02K 1/20

(54) **Stator in einem Elektromotor**

(30) Priorität: 13.05.2009 DE 102009003058
(71) Anmelder: Robert Bosch GmbH, 70469 Stuttgart (DE)
(72) Erfinder: Evans, Steven Andrew, 77815, Buehl (DE)

(57) **Zusammenfassung**

Ein Stator in einem Elektromotor besteht aus einer Mehrzahl parallel angeordneter und zu einem Paket zusammengefasster Lamellen, wobei die Lamellen mit mindestens einer Kühlrippe versehen sind, die an der radialen Außenkante der Lamelle angeordnet ist und mit der Ebene der Lamelle einen Winkel einschließt.

## Beschreibung

Die Erfindung bezieht sich auf einen Stator in einem Elektromotor nach dem Oberbegriff des Anspruches 1.

### Stand der Technik

In der US 2006/0091759 A1 wird ein permanentmagneterregter Innenläufer-Gleichstrom-Elektromotor beschrieben, der in einem Gehäuse ein fest angeordnetes Statorpaket umfasst, in welchem ein Rotor drehbar gelagert ist, welcher durch Erzeugen eines elektromagnetischen Feldes im Stator angetrieben wird. Das Statorpaket ist aus einer Mehrzahl einzelner Lamellen aufgebaut, die axial hintereinander liegend angeordnet sind und parallel zueinander ausgerichtet sind. Die Lamellen sind Träger einer Statorwicklung, in denen das elektromagnetische Feld erzeugt wird.

Im Betrieb des Elektromotors entsteht durch die Bestromung und Eisenverluste einerseits sowie durch Reibung in der Lagerung des umlaufenden Rotors andererseits Wärme, die mittels geeigneter Maßnahmen abgeleitet werden muss. Dies erfolgt beispielsweise mithilfe von Kühlrippen, die in das Statorgehäuse eingebracht sind. Eine derartige Ausführung wird beispielsweise in der EP 0 895 666 B1 beschrieben. Gemäß dieser Druckschrift ist vorgesehen, dass an der Gehäuseaußenseite des Statorgehäuses sich über die axiale Länge erstreckend eine Mehrzahl schräg verlaufender Kühlrippen einteilig mit dem Gehäuse ausgebildet sind, die bezogen auf die Motorlängsachse unter einem Winkel von etwa 45° angeordnet sind. Die Kühlrippen bedecken die gesamte Außenseite des Gehäuses, wobei aufgrund der winkligen Anordnung sowie der hohen Anzahl an Kühlrippen das Gehäuse aufwändig herzustellen ist. Zu berücksichtigen ist zudem, dass ein guter Wärmeübergang von dem innen liegenden Statorpaket auf das umgreifende Statorgehäuse gewährleistet sein muss.

### Offenbarung der Erfindung

Der Erfindung liegt die Aufgabe zugrunde, einen Stator in einem Elektromotor mit einfachen konstruktiven Maßnahmen in der Weise zu gestalten, dass eine effektive Wärmeableitung gewährleistet ist.

Diese Aufgabe wird erfindungsgemäß mit den Merkmalen des Anspruches 1 gelöst. Die Unteransprüche geben zweckmäßige Weiterbildungen an.

Der erfindungsgemäße Stator wird in Innenläufer-Elektromotoren eingesetzt und umschließt im montierten Zustand einen drehbar gelagerten Rotor. Bei dem Elektromotor handelt es sich beispielsweise um einen permanentmagneterregten Gleichstrommotor, der zum Antrieb eines Aggregats bzw. Nebenaggregats in einem Kraftfahrzeug eingesetzt werden kann, zum Beispiel als Wischermotor oder als Fensterhebermotor. In Betracht kommt auch eine Anwendung beispielsweise in Elektrowerkzeugen.

Der Stator besteht aus einer Mehrzahl parallel angeordneter und zu einem Paket zusammengefasster Lamellen, wobei gemäß der Erfindung mindestens ein Teil der Lamellen mit mindestens einer Kühlrippe versehen ist, die an der radialen Außenkante der Lamelle angeordnet ist, wobei zumindest ein Abschnitt der Kühlrippe mit der Lamellenebene einen Winkel einschließt. An der Außenseite bzw. der Seitenfläche der Kühlrippe streicht die Kühlluft entlang, die Wärme von der Kühlrippe aufnimmt.

Diese Ausführung weist verschiedene Vorteile auf. Zum einen ist aufgrund der winkligen Anordnung der Kühlrippe an der Außenkante der Lamelle eine Verwirbelung der entlang streichenden Kühlluft gewährleistet, wodurch die Wärmeaufnahme verbessert und die Kühlleistung erhöht wird. Die Verwirbelung der Kühlluft findet in allen Positionen des Stators statt, also sowohl bei horizontaler Ausrichtung der Statorlängsachse als auch bei einer vertikalen Ausrichtung oder einer zwischenliegenden Winkellage. Durch die Wärmeentwicklung steigt die Luft an der Außenseite der Lamellen nach oben, wobei aufgrund der winkligen Ausrichtung der Kühlrippe sichergestellt ist, das aufsteigende Kühlluft unabhängig von der aktuellen Statorlage von der Kühlrippe verwirbelt wird.

Ein weiterer Vorteil der erfindungsgemäßen Ausführung ist darin zu sehen, dass die Kühlrippe einteilig bzw. einstückig mit der Lamelle ausgebildet werden kann, was die Herstellung von Lamelle einschließlich Kühlrippe erheblich vereinfacht. Gemäß einer vorteilhaften Ausführung ist vorgesehen, dass die winklige Ausrichtung der Kühlrippe durch Umformen der Lamelle erzeugt wird. Die Lamelle besteht beispielsweise aus einem ebenen, gestanzten Blech, wobei die an der radialen Außenkante angeordnete Kühlrippe durch einen einfachen Umformvorgang in die winklige Ausrichtung bezogen auf die Lamellenebene gebracht werden kann.

Der Winkel, unter dem die Kühlrippe zur Lamellenebene liegt, liegt vorzugsweise zwischen 30° und kleiner als 90°, insbesondere 45°. Bei einer 45°-Ausrichtung der Kühlrippe ist eine gleichermaßen gute Luftverwirbelung sowohl bei horizontaler als auch bei vertikaler Ausrichtung des Stators gewährleistet.

Grundsätzlich reicht es aus, am Außenumfang der Lamelle nur eine einzelne Kühlrippe anzuordnen. Mehrere hintereinander angeordnete Kühllamellen weisen vorzugsweise eine Winkelausrichtung relativ zueinander auf, in der die Kühlrippen winkelversetzt zueinander angeordnet sind. Auf diese Weise können in dem Statorpaket Kühlrippen über den gesamten Umfang verteilt angeordnet werden. Zweckmäßigerweise sind jeweils zwei unmittelbar aufeinander folgende Kühllamellen jeweils mit mindestens einer Kühlrippe versehen, die zueinander winkelversetzt sind. Möglich ist es aber auch, einzelne Lamellen ohne Kühlrippen innerhalb des Statorpakets vorzusehen.

Gemäß einer weiteren vorteilhaften Ausführung weist mindestens eine Lamelle mindestens zwei oder mehr Kühlrippen auf, die an der Lamelle an unterschiedlichen Winkelpositionen angeordnet sind. Hierbei ist eine symmetrische Ausrichtung vorteilhaft, also beispielsweise im Falle von zwei Kühlrippen eine diametral gegenüberliegende Anordnung oder bei vier Kühlrippen eine um 90° versetzte Anordnung an der Lamelle. Werden mehrere Lamellen mit jeweils mehreren Kühlrippen zum Statorpaket zusammengesetzt, so ist es zweckmäßig, über eine winkelversetzte Lage unmittelbar benachbarter Lamellen dafür zu sorgen, dass die Kühlrippen der axial direkt aneinander liegenden Lamellen zueinander winkelversetzt sind. Insgesamt kann über die größere Anzahl von Kühlrippen pro Lamelle eine höhere Kühlrippendichte im Statorpaket und damit eine verbesserte Wärmeableitung erzielt werden.

Die Wandstärke der Kühlrippe liegt insbesondere zwischen 0.3 mm und 1 mm, beispielsweise bei 0.5 mm. Diese verhältnismäßig geringe Wandstärke verbessert die Wärmeableitung. Des Weiteren ist es vorteilhaft, dass die Kühlrippe die gleiche Wandstärke wie die Lamelle aufweist, was insbesondere bei einer einteiligen Ausführung von Lamelle und Kühlrippe ohne Weiteres gewährleistet ist, soweit Lamelle und Kühlrippe aus einem gemeinsamen Stanzblech gefertigt sind.

Gemäß einer weiteren zweckmäßigen Ausführung besteht die Lamelle aus einem Trägerring, an dessen Innenseite radial nach innen weisende Trägerzähne zur Aufnahme jeweils einer Spule angeordnet sind, wobei an der Außenseite des Trägerrings die Kühlrippe angeordnet ist. Hierbei ist es zweckmäßig, dass die Kühlrippe bezogen auf den Trägerzahn in der Weise positioniert wird, dass die Kühlrippe in Umfangsrichtung in Höhe eines Trägerzahns angeordnet ist und diesen übergreift. Dies hat Vorteile im Falle einer polygonal geformten Außenseite des Trägerrings, da sich die Kühlrippe in Umfangsrichtung über die Länge eines einzelnen Polygonzugs an der Außenseite erstrecken kann.

Gemäß einer weiteren vorteilhaften Ausführung ist vorgesehen, dass das Lamellenpaket zugleich das Statorgehäuse des Stators bildet. In dieser Ausführung kann auf eine separate Ausbildung eines das Lamellenpaket umgreifenden Statorgehäuses verzichtet werden. Außerdem ist die Wärmeableitung nochmals verbessert, da kein radialer Wärmeübergang von dem Lamellenpaket zum Statorgehäuse erforderlich ist, so wie dies im Stand der Technik der Fall ist. Vielmehr wird die im Stator entstehende bzw. befindliche Wärme unmittelbar an die Umgebung abgegeben.

Die Geometrie der Kühlrippe kann an den jeweiligen Einsatzzweck angepasst werden. In Betracht kommt beispielsweise eine radiale Erstreckung der Kühlrippe, die in etwa gleich ist wie die radiale Erstreckung des Trägerrings. Außerdem kommen verschiedene Geometrieformen der Kühlrippe in Betracht. Möglich ist beispielsweise eine geradlinige Außenkante der Kühlrippe oder eine konvex oder konkav gekrümmte Außenkante.

Weitere Vorteile und zweckmäßige Ausführungen sind den weiteren Ansprüchen, der Figurenbeschreibung und den Zeichnungen zu entnehmen. Es zeigen:
- Fig. 1: eine Darstellung eines Stators mit darin aufgenommenem, nach unten herausragenden Rotor in vertikaler Ausrichtung, wobei der Stator ein Statorpaket mit einer Mehrzahl einzelner Lamellen aufweist, die jeweils mit winklig gebogenen Kühlrippen versehen sind,
- Fig. 2: eine Fig. 1 entsprechende Darstellung, jedoch in horizontaler Ausrich- tung des Stators und des Rotors,
- Fig. 3: eine Fig. 1 entsprechende Darstellung mit einer Ausrichtung des Stators in Vertikalrichtung, jedoch mit nach oben überstehender Rotorwelle,
- Fig. 4: eine perspektivische Ansicht einer einzelnen Lamelle, bestehend aus ei- nem Trägerring mit einer Mehrzahl radial nach innen ragender Träger- zähne und insgesamt vier an der Außenseite des Trägerrings angeord- neten Kühlrippen, die bezogen auf die Ebene der Lamelle winklig abge- bogen sind,
- Fig. 5: eine schematische Darstellung mit einer Vorrichtung zur Herstellung der gebogenen Kühlrippen an den Lamellen eines Statorpaketes,
- Fig. 6: eine perspektivische Ansicht eines Statorpakets mit einer Mehrzahl pa- rallel angeordneter Lamellen gemäß Fig. 4,
- Fig. 7: eine vergrößerte Ansicht des Statorpakets nach Fig. 6,
- Fig. 8: eine perspektivische Ansicht einer Lamelle in einer weiteren Ausführung, bei der am Außenumfang des Trägerrings der Lamelle diametral gege- nüberliegend zwei winklig abgebogene Kühlrippen angeordnet sind,
- Fig. 9: ein Statorpaket mit einer Mehrzahl axial hintereinander liegender Lamel- len gemäß Fig. 8,
- Fig. 10: eine vergrößerte Ansicht des Statorpakets aus Fig. 9,
- Fig. 11: eine Prinzipdarstellung einer Lamelle mit Kühlrippen in verschiedenen Ausführungsvarianten,
- Fig. 12: in schematischer Darstellung eine Seitenansicht auf ein Statorpaket.

In den Figuren sind gleiche Bauteile mit gleichen Bezugszeichen versehen.

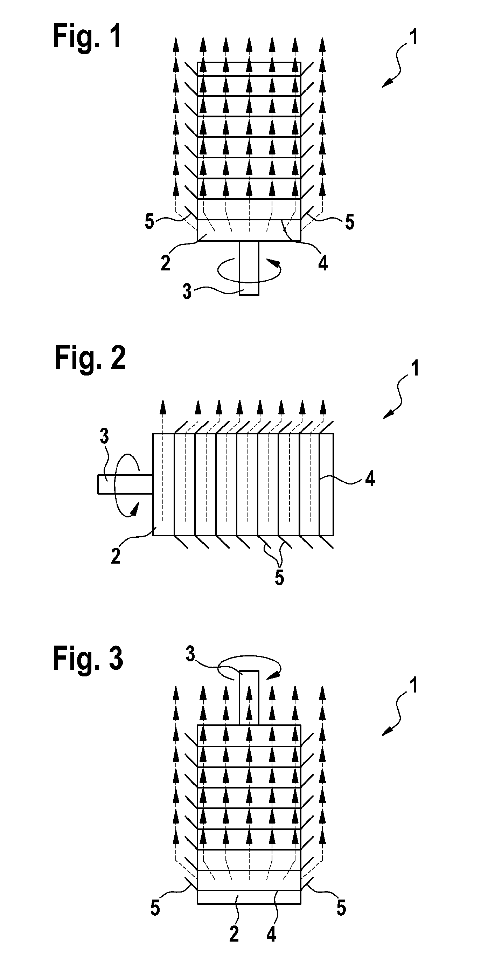

Die Fig. 1 bis 3 zeigen jeweils einen Elektromotor 1, der als Innenläufer-Motor ausgeführt ist und einen Stator 2 aufweist, in welchem ein Rotor 3 drehbar gelagert ist. Der Stator 2 besteht aus einer Mehrzahl einzelner, parallel zueinander angeordneter Lamellen 4, die insgesamt ein Statorpaket bilden. Der Stator 2 weist kein separates Statorgehäuse auf; vielmehr bildet das Statorpaket, bestehend aus den einzelnen Lamellen 4, zugleich das Statorgehäuse. Die Lamellen 4 sind in der Weise angeordnet, dass die Ebene jeder Lamelle senkrecht zur Motorlängsachse liegt.

Einteilig mit jeder Lamelle 4 sind die radiale Außenkante der Lamelle überragende Kühlrippen 5 ausgebildet, die bezogen auf die Lamellenebene abgewinkelt sind. Die Kühlrippen 5 schließen aufgrund ihrer winkligen Anordnung sowohl mit der Lamellenebene als auch mit der Motorlängsachse einen Winkel ein. Im Ausführungsbeispiel beträgt der Winkel der Kühlrippen 5 gegenüber der Lamellenebene bzw. der Motorlängsachse 45°.

Jede Lamelle 4 ist mit einer Mehrzahl von Kühlrippen 5 versehen, die über den Umfang der Lamellen verteilt angeordnet sind. Die Kühlrippen einer Lamelle 4 weisen jeweils die gleiche Winkelorientierung auf, bezogen auf die Lamellenebene.

Im Ausführungsbeispiel gemäß Fig. 1 ist der Elektromotor 1 vertikal ausgerichtet, wobei die Rotorwelle 3 nach unten weist und am unteren Ende des Statorpaketes aus diesem herausragt. Die Kühlrippen 5 sind in einem 45°-Winkel nach oben gebogen. Mit Pfeilen ist der Kühlluftstrom an der Außenseite des Statorpaketes dargestellt. Wie zu erkennen ist, bewirken die Kühlrippen 5 eine Ablenkung des Kühlluftstroms und eine damit einhergehende Verwirbelung, ohne jedoch prinzipiell die Strömungsrichtung des Kühlluftstromes von unten nach oben zu behindern. Aufgrund dieser Orientierung der Kühlrippen 5 wird der Kontakt des Kühlluftstromes an den Außenflächen der Kühlrippen intensiviert, zugleich ist aber eine ausreichende Strömung der Kühlluft entlang der Außenseite des Statorpaketes gewährleistet.

Im Ausführungsbeispiel gemäß Fig. 2 ist der Elektromotor 1 horizontal ausgerichtet, wobei die Anordnung der Kühlrippen 5 in analoger Weise zum Ausführungsbeispiel gemäß Fig. 1 ausgeführt ist. Aufgrund der winkligen Anordnung der Kühlrippen 5 an den Lamellen 4 wird auch bei horizontaler Ausrichtung des Elektromotors eine Umlenkung des von unten nach oben gerichteten Kühlluftstromes und damit eine verbesserte Wärmeableitung erreicht.

Im Ausführungsbeispiel gemäß Fig. 3 ist der Elektromotor 1 analog zum ersten Ausführungsbeispiel vertikal ausgerichtet, jedoch mit nach oben weisender Rotorwelle 3. Die Kühlrippen 5, die unter dem 45°-Winkel bezogen auf die Ebene der Lamellen 4 bzw. die Motorlängsachse angeordnet sind, sind nach oben gerichtet, so dass der von unten nach oben aufsteigende Kühlluftstrom nur eine Ablenkung an den Kühlrippen erfährt, jedoch die generelle Strömung nicht behindert wird.

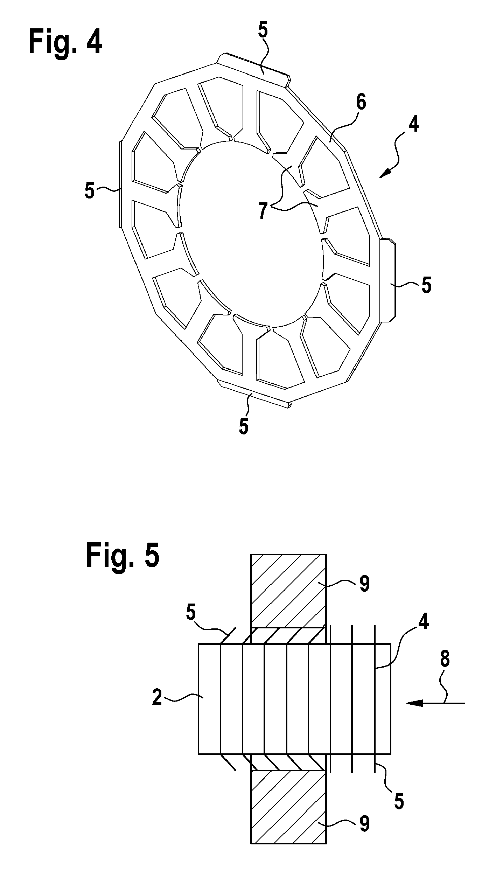

In Fig. 4 ist eine Lamelle 4 in perspektivischer Einzeldarstellung gezeigt. Die Lamelle 4 besteht aus einem gestanzten Blech und weist einen umlaufenden Trägerring 6 an, an dessen Innenseite radial nach innen ragende Trägerzähne 7 einstückig angeordnet sind. Jeder Trägerzahn 7 ist Träger einer Spule. Im montierten Zustand liegen eine Mehrzahl derartiger Lamellen 4 unmittelbar aneinander und bilden gemeinsam das Statorpaket, wobei die Trägerzähne 7 der verschiedenen Lamellen zueinander ausgerichtet sind, so dass in Achsrichtung die Trägerzähne 7 unmittelbar aneinander liegen. Im Ausführungsbeispiel gemäß Fig. 4 sind über den Innenumfang verteilt insgesamt zwölf Trägerzähne 7 vorgesehen.

An der Außenseite sind insgesamt vier Kühlrippen 5 angeordnet, die einstückig mit dem Trägerring 6 ausgebildet sind und in einem gemeinsamen Stanzprozess mit der Lamelle 4 ausgestanzt werden. Über den Umfang verteilt sind im Ausführungsbeispiel vier Kühlrippen 5 vorgesehen, die zueinander in einem 90°-Winkel positioniert sind. Die Kühlrippen 5 stehen radial über die Außenkante der Lamelle 4 über und sind gegenüber der Lamellenebene um einen Winkel gebogen, der vorzugsweise zwischen 30° und kleiner als 90° ist und vorzugsweise 45° beträgt. Alle Kühlrippen 5 an einer Lamelle 4 sind in die gleiche Richtung gebogen. Grundsätzlich möglich ist aber auch eine Ausführung mit Kühlrippen, die in entgegengesetzte Richtungen bezogen auf die Lamellenebene gebogen sind.

Der Trägerring 6 ist als Polygon ausgeführt und besitzt der Anzahl an Trägerzähnen 7 entsprechend geradlinige Polygonzüge, wobei der Winkel zwischen benachbarten Polygonzügen sich ebenfalls aus der Anzahl der Trägerzähne berechnet. Bei zwölf Trägerzähnen beträgt der Winkel 30°. Die Kühlrippen 5 sind in der Weise am Außenumfang der Lamelle 4 angeordnet, dass die Länge der Kühlrippe 5 in Umfangsrichtung der Länge eines geradlinigen Polygonzugs am Außenumfang der Lamelle entspricht. Jede Kühlrippe 5 besitzt eine etwa rechteckförmige Querschnittsform.

In Fig. 5 ist der als Statorpaket ausgeführte Stator 2 während des Prozesses zur Herstellung der gebogenen Kühlrippen 5 dargestellt. Das Statorpaket wird in Pfeilrichtung 8 zwischen Werkzeugen 9 hindurchgeschoben, wobei die ursprünglich in der Ebene der Lamellen liegenden, noch nicht gebogenen Kühlrippen 5, die radial überstehen, zu dem gewünschten Winkel von beispielsweise 45° umgebogen werden. Möglich ist es auch, das Statorpaket zu fixieren und die Werkzeuge 9 relativ zum Statorpaket zu bewegen.

Grundsätzlich möglich ist es darüber hinaus, die einzelnen Lamellen vor dem Zusammenbau zum Statorpaket so zu bearbeiten, dass die radial überstehenden Kühlrippen zunächst umgebogen und erst anschließend die Lamellen zu dem Statorpaket zusammengefasst werden.

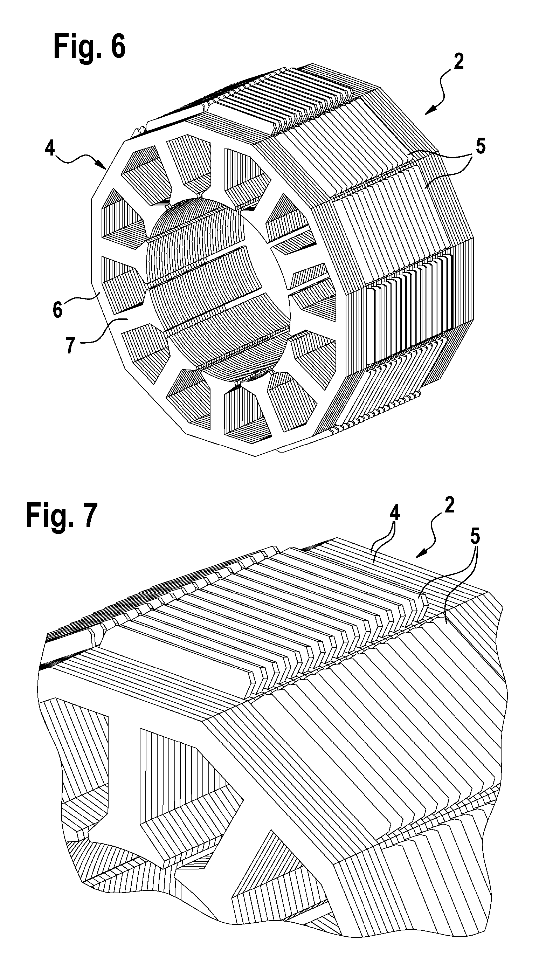

In den Fig. 6 und 7 ist das Statorpaket 2, bestehend aus einer Mehrzahl einzelner Lamellen 4, in perspektivischer Ansicht gezeigt. Unmittelbar benachbarte Lamellen 4 sind zueinander winkelversetzt angeordnet, insbesondere in einem Winkel, der sich aus der Anzahl der Trägerzähne ermittelt, also im Ausführungsbeispiel um 30°. Da die Anzahl der Kühlrippen kleiner ist als die Anzahl der Trägerzähne, sind in Achsrichtung die Kühlrippen unterschiedlicher Lamellen nicht unmittelbar benachbart zueinander angeordnet, sondern es liegen eine oder mehrere Lamellen dazwischen, die an dieser Position keine Kühlrippe aufweisen. Dies hat den Vorteil, dass in Achsrichtung ein definierter Mindestabstand zwischen den Kühlrippen vorhanden ist, so dass die Wärme besser abgeleitet werden kann.

Die Dicke der Kühlrippe entspricht der Dicke der Lamelle und beträgt vorzugsweise 0.3 mm bis 1 mm, beispielsweise 0.5 mm.

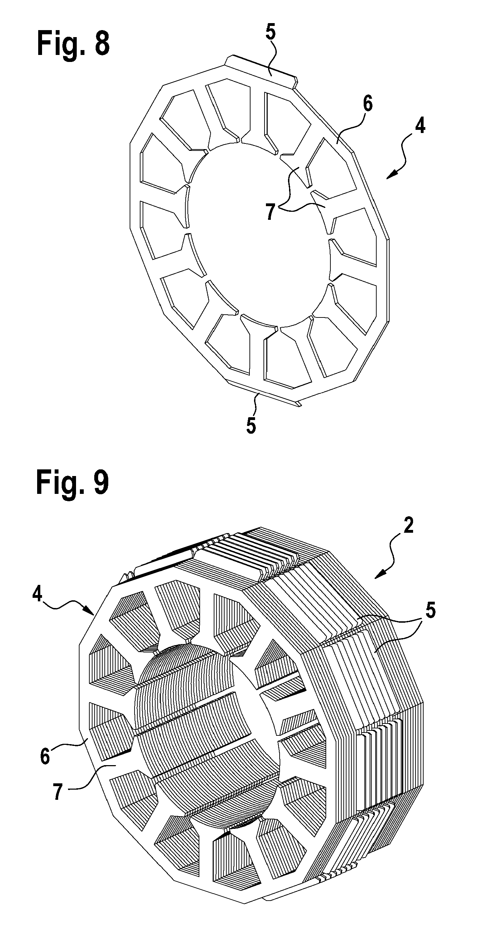

In den Fig. 8 bis 10 ist ein weiteres Ausführungsbeispiel mit einer Lamelle 4 bzw. einem Statorpaket aus diesen Lamellen 4 dargestellt, das in seinem grundsätzlichen Aufbau dem Ausführungsbeispiel nach den Fig. 4 und 6 bzw. 7 entspricht, jedoch mit dem Unterschied, dass die Lamelle 4 lediglich zwei Kühlrippen 5 aufweist. Die Kühlrippen 5 sind um 180° zueinander versetzt angeordnet und befinden sich somit an diametral gegenüberliegenden Seiten an dem Trägerring 6 der Lamelle 4. Wie beim vorangegangenen Ausführungsbeispiel sind insgesamt zwölf Trägerzähne 7 an der Innenseite des Trägerringes 6 angeordnet, dementsprechend besteht die Außenseite des Trägerrings 6 aus zwölf Polygonzügen, die zueinander in einem Winkel von 30° stehen.

Aufgrund der geringeren Anzahl an Kühlrippen 5 pro Lamelle 4 ist in dem Statorpaket 2 die Dichte der Kühlrippen im Vergleich zum Ausführungsbeispiel 6 bzw. 7 reduziert. Dies führt zu einem größeren Abstand in Achsrichtung zwischen den Kühlrippen 5.

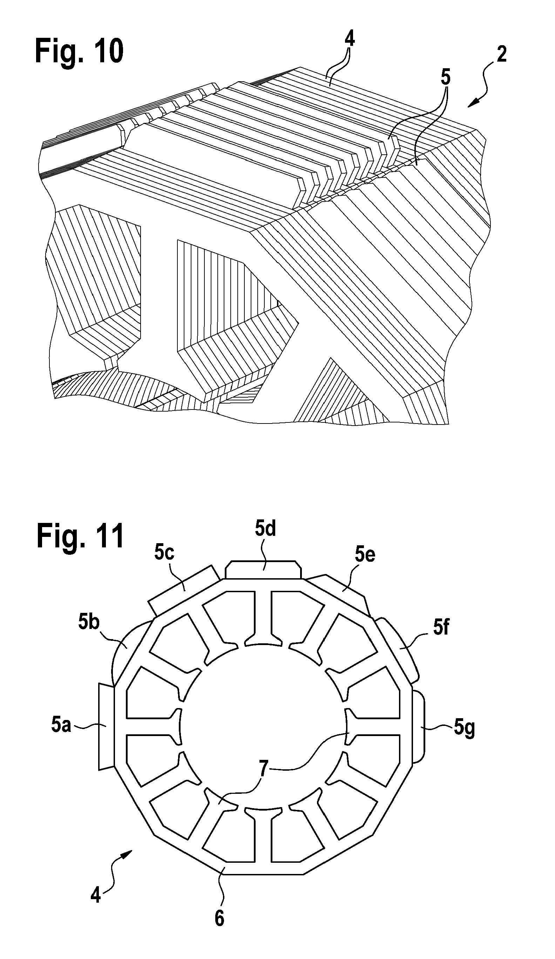

Im Ausführungsbeispiel gemäß Fig. 11 sind eine Mehrzahl unterschiedlich ausgebildeter Kühlrippen 5 an der Außenseite der Lamelle 4 beispielhaft dargestellt. Die Kühlrippen 5 weisen verschiedene Geometrien auf. Grundsätzlich kommen sowohl geradlinige radiale Außenkanten als auch gekrümmte Außenkanten der Kühlrippen in Betracht. Die Kühlrippe 5a ist trapezförmig ausgeführt, wobei die radiale Innenkante, die einen Polygonzug des Trägerrings 6 bildet, kürzer ist als die radiale Außenkante. Die Kühlrippe 5b ist als Kreissegment ausgeführt, die radiale Außenkante besitzt dementsprechend Teilkreisform. Die Kühlrippe 5c ist rechteckförmig ausgeführt. Die Kühlrippe 5d ist ebenfalls rechteckförmig ausgeführt, jedoch sind die außen liegenden Kanten abgeschrägt. Die Kühlrippe 5e ist trapezförmig ausgebildet mit längerer radialer Innenkante und kürzerer radialer Außenkante. Die Kühlrippe 5f weist eine geringfügig gekrümmte Außenkante auf. Die Kühlrippe 5g weist eine geradlinige Außenkante auf, die parallel zur Innenkante liegt, wobei der Übergang von der Außenkante zur Innenkante gebogen verläuft.

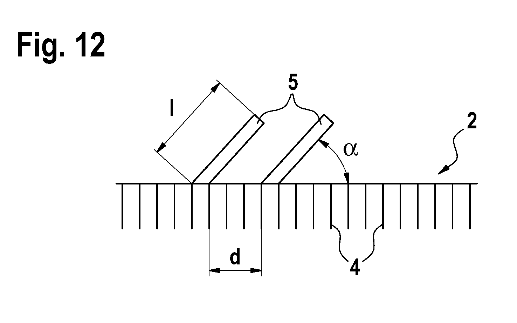

Im Ausführungsbeispiel gemäß Fig. 12 ist in schematischer Weise ein Schnitt durch ein Statorpaket 2 mit einer Mehrzahl einzelner, parallel zueinander angeordneter Lamellen 4 dargestellt. Die Kühlrippen 5, die über die Mantelfläche der Lamellen 4 radial überstehen, sind gegenüber der Ebene der Lamellen 4 um den Winkel α geneigt. Die Länge I der Kühlrippen 5, der Winkel α sowie der Abstand d zwischen in Achsrichtung benachbarten Kühlrippen 5 werden je nach Einsatzzweck aufeinander abgestimmt. Zu erkennen ist, dass zwischen axial benachbarten Kühlrippen 5 mehrere Lamellen 4 ohne Kühlrippen an dieser Stelle angeordnet sind.

## Patentansprüche

1. Stator in einem Elektromotor (1), bestehend aus einer Mehrzahl parallel angeordneter, zu einem Paket zusammengefasster Lamellen (4), **dadurch gekennzeichnet, dass** mindestens ein Teil der Lamellen (4) mit mindestens einer Kühlrippe (5) versehen ist, die an der radialen Außenkante der Lamelle (4) angeordnet ist, wobei eine Außenseite der Kühlrippe (5) mit der Lamellenebene einen Winkel einschließt.

2. Stator nach Anspruch 1, **dadurch gekennzeichnet, dass** der Winkel mindestens 30° und kleiner als 90° beträgt, insbesondere 45°.

3. Stator nach Anspruch 1 oder 2, **dadurch gekennzeichnet, dass** über den Umfang verteilt mindestens zwei Kühlrippen (5) an einer Lamelle (4) angeordnet sind.

4. Stator nach einem der Ansprüche 1 bis 3, **dadurch gekennzeichnet, dass** die Kühlrippe (5) die gleiche Wandstärke wie die Lamelle (4) aufweist.

5. Stator nach einem der Ansprüche 1 bis 4, **dadurch gekennzeichnet, dass** die Wandstärke der Kühlrippe (5) zwischen 0.3 mm und 1 mm, insbesondere 0.5 mm beträgt.

6. Stator nach einem der Ansprüche 1 bis 5, **dadurch gekennzeichnet, dass** mindestens zwei Lamellen (4) jeweils mindestens eine Kühlrippe (5) aufweisen, wobei die Kühlrippen (5) unterschiedlicher Lamellen (4) im Lamellenpaket winkelversetzt angeordnet sind.

7. Stator nach Anspruch 6, **dadurch gekennzeichnet, dass** unmittelbar benachbarte Lamellen (4) im Lamellenpaket jeweils eine winkelversetzt zueinander angeordnete Kühlrippen (5) aufweisen.

8. Stator nach einem der Ansprüche 1 bis 7, **dadurch gekennzeichnet, dass** die Kühlrippe (5) quer zur Statorlängsachse verläuft.

9. Stator nach einem der Ansprüche 1 bis 8, **dadurch gekennzeichnet, dass** die Lamelle (4) aus einem Trägerring (6) besteht, an dessen Innenseite radial nach innen weisende Trägerzähne (7) zur Aufnahme eine Spule und an dessen Außenseite die Kühlrippe (5) angeordnet ist.

10. Stator nach Anspruch 9, **dadurch gekennzeichnet, dass** die Kühlrippe (5) in Umfangsrichtung einen Trägerzahn (7) übergreift.

11. Stator nach Anspruch 9 oder 10, **dadurch gekennzeichnet, dass** die radiale Erstreckung der Kühlrippe (5) zumindest annähernd der radialen Erstreckung des Trägerrings (6) entspricht.

12. Stator nach einem der Ansprüche 1 bis 11, **dadurch gekennzeichnet, dass** die Kühlrippe (5) durch Umformen der Lamelle (4) gebildet ist.

13. Stator nach einem der Ansprüche 1 bis 12, **dadurch gekennzeichnet, dass** das Lamellenpaket zugleich das Statorgehäuse bildet.

14. Stator nach einem der Ansprüche 1 bis 13, **dadurch gekennzeichnet, dass** die radiale Außenkante der Kühlrippe (4) geradlinig ausgebildet ist.

15. Stator nach einem der Ansprüche 1 bis 13, **dadurch gekennzeichnet, dass** die radiale Außenkante der Kühlrippe (5) gekrümmt ausgebildet ist.

16. Elektromotor (1) mit einem Stator (2) nach einem der Ansprüche 1 bis 10.
